# EUROPEAN PATENT APPLICATION

(11) **EP 2 222 072 A2**
(43) Date of publication of application: **25.08.2010**
(21) Application number: 10151512.0
(22) Date of filing: 25.01.2010
(51) Int. Cl.: H04N 1/32

(54) **Font-input based recognition engine for pattern fonts**

(30) Priority: 26.01.2009 US 359502
(71) Applicant: Xerox Corporation, Rochester, New York 14644 (US)
(72) Inventor: Fan, Zhigang, Webster, NY 14580 (US); Eschbach, Reiner, Webster, NY 14580 (US)
(74) Representative: Skone James, Robert Edmund

(57) **Abstract**

As set forth herein, a computer implemented method is used to encode and decode a user-individualized font. A variable alphabet is created and a document is created (102) using this variable alphabet to encode machine readable information. The variable alphabet is communicated to a generalized recognition engine via a predefined font mechanism. The alphabet representation is used to modify the recognition engine, by at least changing one or more template definitions.

## Description

The presently disclosed embodiments are directed to a recognition engine that steers processing and character assignment based on a customer defined font that is particularly applied as background to humanly perceptible alphanumerical, graphical or pictorial information.

Since print systems have been in existence, printers have sought methods for inhibiting counterfeiting, forgery and unauthorized copying of printed documents. Enhanced complexity in an engraved pattern of a press plate is one such method that most people are familiar with as a result of its everyday observation in currency bills. Bank checks, security documents, bonds and other financial documents are other examples of printed documents having complex background patterns to inhibit unauthorized reproduction. Identification documents, e.g. passports, social security cards and the like, are other examples. Credit cards not only have complex background patterns, but now also have embedded holographics to enhance verification and authentication of such a card.

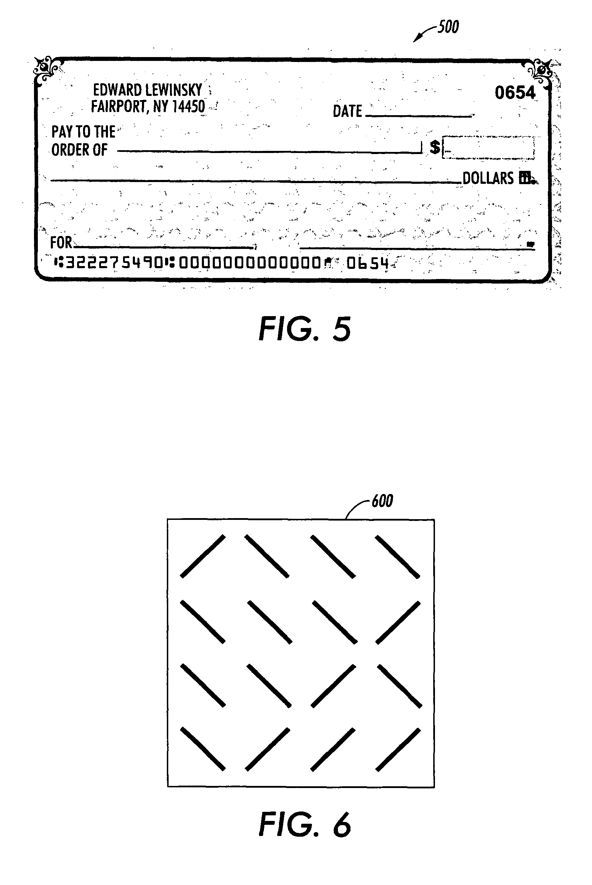

As far as printed documents are concerned, a common complex background pattern is a guilloché line pattern, i.e., an ornamental pattern or border consisting of lines flowing in interlaced curves. Figure 5 is a check pattern exemplifying a guilloché. The guilloché patterns are designed to be hard to reproduce and thus can serve as a security feature. However, an associated disadvantage is that the applied pattern or information is often fixed in nature. Accordingly, the fixed nature of the pattern means that it is common and identical on all documents on which it is printed. Often it is preprinted on the document before the document is usually used (e.g., checks).

More particularly, even though such background patterns are designed to be hard to reproduce, at the same time, they are fixed, meaning every passport has the same pattern as all passports from that country, every monetary note has the same pattern as the same note from that country, any credit card has the same pattern, etc. This actually decreases the amount of security afforded by a guilloché since it is sufficient to re-create one pattern in order to counterfeit N credit cards. It would therefore be desirable and a substantial improvement to have a variable guilloché, where, for example, the credit card number is embedded in the guilloché and thus every credit card has a different pattern (to a decoder) while having the identical human visual impression.

Glyph technology, cf. U.S. Patent No. #5,449,896, is another well known security system which can uniquely identify a document, but the inclusion of a glyph code (or any bar coding system of that type) is easily humanly perceptible for its inclusion on the document, although the meaning of the glyph itself is generally only machine decodable.

There also exist various digital watermarking methods that embed information into images. However, most such methods were designed mainly for continuous-tone pictorial type images. They often modulate the intensity (color) of individual pixels. When applied to line patterns, these methods result in isolated pixels that cannot be reliably printed. Additionally, image watermarking is often too complex and thus slow for the real-time printing of large amounts of secured documents.

One common aspect of all such security feature applications is the addition of some kind of information into the document that prevents/hinders alterations, forgery and counterfeiting. In many cases, background patterns are used to achieve a certain amount of security. U.S. Patent Application Serial No. 11/756,390, "Variable Data Periodic Line Patterns For Composing A Font System" and U.S. Patent Application Serial No. 11/756,375, "Font Printing System Having Embedded Security Information Comprising Variable Data Periodic Line Patterns," both incorporated in their entirety herein, disclose systems related to variable background systems to encode information therein. However, none of these solutions provide a closed system to store machine-readable information as part of a security solution.

Instead, the current specialty imaging technologies are designed to fit into a variable data workflow, where all elements are "decoded" by a human observer. Examples are GlossMarks (viewed at oblique angles), Fluorescent Text (viewed under UV illumination), Microtext (view with a loupe), etc., where a human can make an immediate judgment as to the authenticity of the document. However, in a large number of cases it would be desirable for the encoding to be done by a machine/computer without the capability of a normal user to correctly decode the information. Machine decodable security marks, however, are not currently supported through specialty imaging based on the complexity of the decoding that requires several decoders with the corresponding cost and effort.

Accordingly, there is a need for a system which allows pattern fonts to be extended to the machine readable area to allow creation of individualized implantations using common software.

In one aspect, a computer implemented method is used to encode and decode a user-individualized font. A variable alphabet is created and a document is created using this variable alphabet to encode machine readable information. The variable alphabet is communicated to a generalized recognition engine via a predefined font mechanism. The alphabet representation is used to modify the recognition engine, by at least changing one or more template definitions.

In another aspect, a computer implemented method is employed to obtain a customer defined font string. A font and an input string are created. The input string is encrypted to create a coded string wherein the coded string is converted to a font string based at least in part upon a font definition. A document is created using the font string to create machine-readable information.

In yet another aspect, a computer implemented method is used to decode a character string. A font definition of a machine readable font is received wherein a font string is extracted from a document using said font definition. A coded string is recreated from the font string based at least in part upon a font definition. The coded string is decrypted to output a user readable character string.

### BRIEF DESCRIPTION OF THE DRAWINGS

FIG. 1 is a flow chart that shows a method to encode data into a font string, in accordance with an exemplary embodiment.
FIG. 2 is a font definition for machine readable specialty imaging fonts, in accordance with an exemplary embodiment.
FIG. 3 illustrates font characters, in accordance with an exemplary embodiment.
FIG. 4 is a flow chart that shows a method to decode the font string as a function of the communicated font, in accordance with an exemplary embodiment.
FIG. 5 is a bank check comprising a background line pattern that may include a font system of distorted base patterns, in accordance with an exemplary embodiment.
FIG. 6 is a single ASCII character, in accordance with an exemplary embodiment.

In the Variable Data Intelligent PostScript Printware (VIPP) architecture, heavy use is made of the font mechanisms in Postscript®. The creation of machine-readable security marks can be accomplished by identical means used for the human-readable marks. The main extension is that the font used in the creation has additional information embedded as standard Postscript key entries. On the decoding side, the "general purpose" decoder reads the identical font and uses the font information to not only establish the necessary alphabet, but also to select one of N predetermined recognition approaches. The simplest form of the N approaches is that of a template "matching" into N orthogonal template sets.

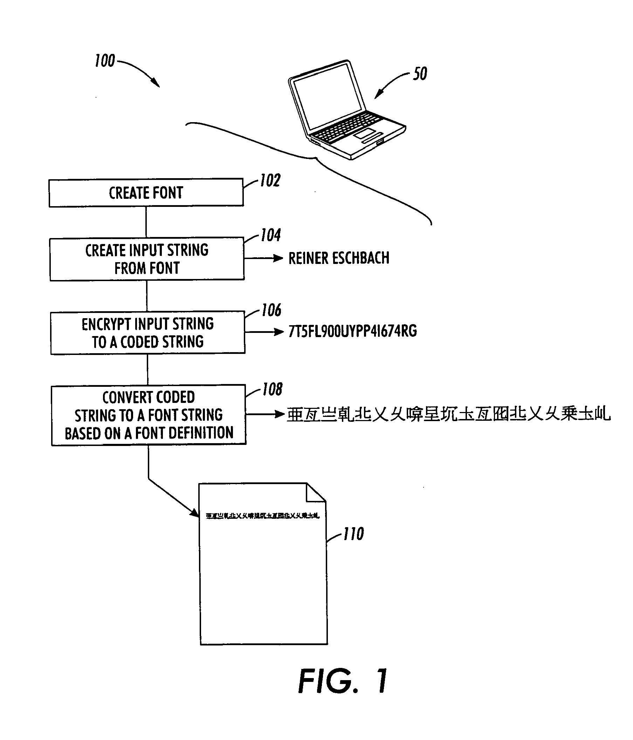

Figure 1 is a flow chart that illustrates an encoding method to obtain a customer defined font string. At 102, a font is created. In one embodiment, the font is created as set forth in U.S. Patent Application Serial No. 11/756,390. Using this approach, a variable data guilloché shaped pattern is created that is comprised of variable data differential line patterns. Decodable template symbols are capable of being selectively assembled into a predetermined variable data code. The code representations are embedded in the guilloché pattern based on standard base patterns. In this manner, the font can be decoded with a digital scan capable of identifying the embedded patterns for communication to a user to verify a document containing the code.

It is to be appreciated that the font created can be substantially any graphic, logo, pattern, etc. that conveys some sort of information. In one example, it is a font based on a known language. Alternatively or in addition, the font is a series of unique images that represent particular bits of information, such as characters in an alphabet. In this manner, the font is created offline and, at 104, is stored for subsequent retrieval.

At 106, an input string is created that is comprised of the desired information to be stored as security for the document. As utilized herein, "string" refers to any data, independent of data type, bit depth, etc. This string is encrypted using an encryption method that is either under user control, or done via a small group (e.g., less than 3) of implemented encryption algorithms. At 108, the input string is encrypted to create a coded string which represents the language for subsequent steps. The coded string can also contain redundancy and other attributes, since the coding is orthogonal to any of the other attributes. This orthogonality can allow the use of standard components for individualized security.

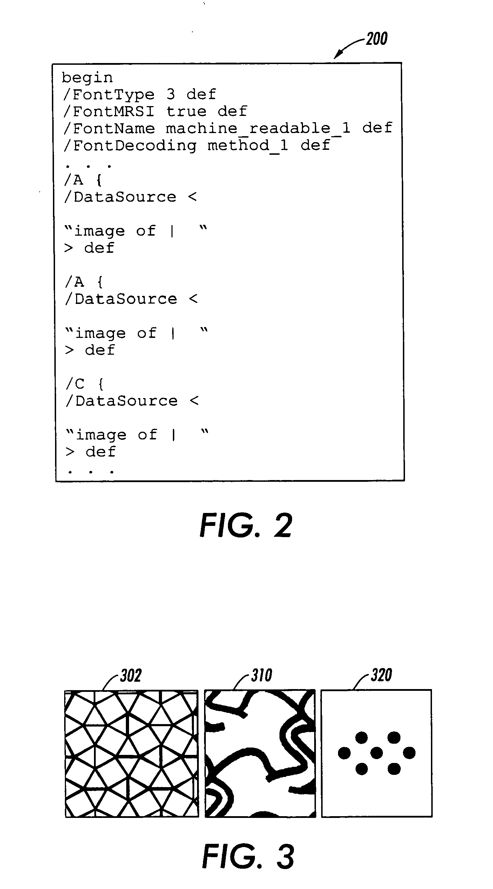

At 110, the coded string is converted to a font string based upon a font definition previously created at step 102 (and stored at step 104) in the definition of the security font. An exemplary digital font definition 200, shown in Fig. 2, can be employed for this purpose. This coded string is printed onto a page 110 using substantially any character set or font. In this example, a Chinese character set is used to exemplify the differences between the information string at 108, the encoding string at 110 and the actually printed representation string at 112.

Figure 2 shows the font definition 200 as used in specialty imaging for VIPP. The font definition 200 includes a "private key" that identifies the decoding mechanism "/FontDecoding method_1 def." The "private key" can also be read by the decoding functionally attached to a scanning device. As known, VIPP makes use of several disparate private keys. All entries in the form of "image of . ." are bitmap definitions as described in the font definition. It is to be appreciated, however, that substantially any type of combination of bitmap images can be employed with the font definition 200.

Conceptually, a user takes a data string, the information, and translates the string into another language. For example, "city" might be translated into German as "Stadt" or into Russian as "gorod". Since in encryption, the language is "private", the word cannot be decoded and now represents the encoded string. This language is now represented by a character set, where above the standard Latin set was used. Using Cyrillic for "gorod" we obtain "ΓOPOΔ" printed representation. Utilizing this simple combinatoric, in this case between "city" and "ΓOPOΔ", an endless way to encrypt and print is created.

The above example was using font characters that have meaning to a human, at least in some languages or symbolisms. The mechanism disclosed herein, however, is more general, since it actually defines a database of pairs between language elements, the atoms, and between atom representations, the characters. In a base form, the representation is on an image basis. Several exemplary font characters based on image are provided as a font character 302, a font character 310, and a font character 320. Utilizing fonts based on disparate images facilitates variable data connections to use with the encoding method 100 for various VIPP applications.

A significant problem related to machine-readable security marks is associated with decoding. However, by utilizing the encoding method 100 as set forth above, the decoding of such font strings is greatly simplified. It may initially appear as though the recognition step simply requires optical character recognition (OCR) and knowledge and technology associated therewith. However, there are important differences between a decoding method 400 and standard OCR processing.

First, since the encoding step can produce seemingly arbitrary character strings, dictionary-based OCR methods cannot be used, which increases the error rate. However, redundancy can optionally be built into the encoding, by providing redundancy similar to the inherent one in natural languages. This can provide a simple way to improve stability that can be used at a later time in the decoding process. Secondly, the actual font character definition is exchanged with the scanner. In other words, the decoder software has full access to the font definition (e.g., utilized to create the font in step 102 above). This provides an advantage over conventional means, since the OCR-like recognition does not have to be insensitive to font changes - there is one font and one font only and this one font is, optionally securely, exchanged between creation/coding and decoding applications.

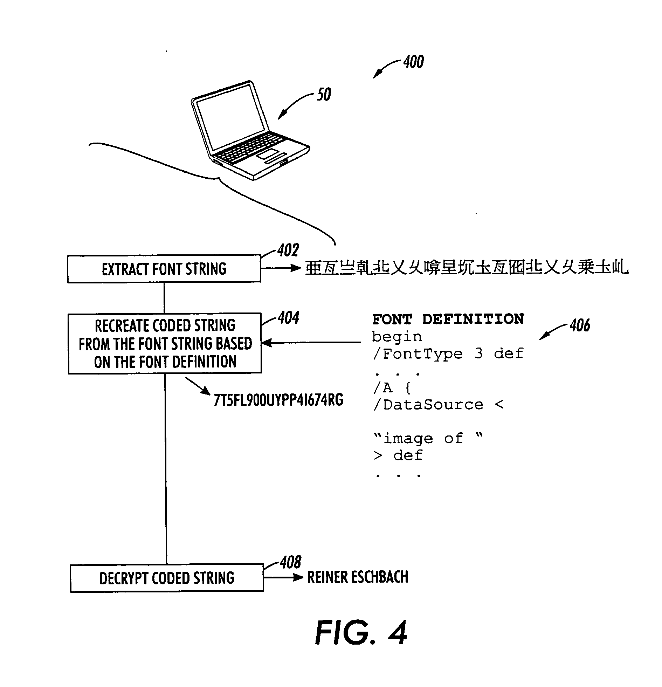

Figure 4 illustrates the decoding method 400 employed to decode the font string encoded via the method 100 above. At 401, the document is scanned and at 402 the font definitions used in creating the document are input to the decoding mechanism. At 403, a font string is extracted from the scanned document using the individual character images that are defined inside the font definition read at 406. The decoding software, which can reside at any spot in the system (e.g., disparate server, etc.). At 404, a coded string is recreated from the font string based on a font definition 406, i.e., the decoded character images are related to the encrypted string, thus reversing the steps 108 and 110 of Figure 1. In one approach, recognition software reads the font definition 406 (e.g., as set forth in the definition 200) and, since the system is closed with respect to input encoding and output decoding, is aware of all private keys.

The character set utilized for encoding can be discerned via a preferred recognition method, as indicated by "/FontDecoding" in the font definition 406. Fonts that are retrievable using template matching can be processed using a generalized template matcher. Other fonts can be subject to "edge finding", "neural net" or any other well known method. In one approach, three different methodologies are employed. In this manner, the language string can be recreated without knowledge of the string meaning (the actual language definition). A vendor can therefore offer a "secured" system that has the additional build-in capability for secondary encryption, i.e., there are no hard-wired notions of encryption or redundancy. Thus, substantially identical software can be used for different customers, while maintaining differentiation and individualization on their side. Once the coded string is recreated, a decryption process is performed at 408 to output a human readable character string.

A computer 450 illustrates one possible hardware configuration to support the systems and methods described herein, including the methods 100 and 400 above. It is to be appreciated that although a standalone architecture is illustrated, that any suitable computing environment can be employed in accordance with the present embodiments. For example, computing architectures including, but not limited to, stand alone, multiprocessor, distributed, client/server, minicomputer, mainframe, supercomputer, digital and analog can be employed in accordance with the present embodiment.

The computer 450 can include a processing unit (not shown), a system memory (not shown), and a system bus (not shown) that couples various system components including the system memory to the processing unit. The processing unit can be any of various commercially available processors. Dual microprocessors and other multiprocessor architectures also can be used as the processing unit.

The system bus can be any of several types of bus structure including a memory bus or memory controller, a peripheral bus, and a local bus using any of a variety of commercially available bus architectures. The computer memory includes read only memory (ROM) and random access memory (RAM). A basic input/output system (BIOS), containing the basic routines that help to transfer information between elements within the computer, such as during start-up, is stored in ROM.

The computer 450 can further include a hard disk drive, a magnetic disk drive, e.g., to read from or write to a removable disk, and an optical disk drive, e.g., for reading a CD-ROM disk or to read from or write to other optical media. The computer 450 typically includes at least some form of computer readable media. Computer readable media can be any available media that can be accessed by the computer. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other magnetic storage devices, or any other medium which can be used to store the desired information and which can be accessed by the computer.

Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above can also be included within the scope of computer readable media.

A number of program modules may be stored in the drives and RAM, including an operating system, one or more application programs, other program modules, and program non-interrupt data. The operating system in the computer 450 can be any of a number of commercially available operating systems.

A user may enter commands and information into the computer through a keyboard (not shown) and a pointing device (not shown), such as a mouse. Other input devices (not shown) may include a microphone, an IR remote control, a joystick, a game pad, a satellite dish, a scanner, or the like. These and other input devices are often connected to the processing unit through a serial port interface (not shown) that is coupled to the system bus, but may be connected by other interfaces, such as a parallel port, a game port, a universal serial bus ("USB"), an IR interface, etc.

A monitor, or other type of display device, is also connected to the system bus via an interface, such as a video adapter (not shown). In addition to the monitor, a computer typically includes other peripheral output devices (not shown), such as speakers, printers etc. The monitor can be employed with the computer 450 to present data that is electronically received from one or more disparate sources. For example, the monitor can be an LCD, plasma, CRT, etc. type that presents data electronically. Alternatively or in addition, the monitor can display received data in a hard copy format such as a printer, facsimile, plotter etc. The monitor can present data in any color and can receive data from the computer 450 via any wireless or hard wire protocol and/or standard.

The computer 450 can operate in a networked environment using logical and/or physical connections to one or more remote computers, such as a remote computer(s). The remote computer(s) can be a workstation, a server computer, a router, a personal computer, microprocessor based entertainment appliance, a peer device or other common network node, and typically includes many or all of the elements described relative to the computer. The logical connections depicted include a local area network (LAN) and a wide area network (WAN). Such networking environments are commonplace in offices, enterprise-wide computer networks, intranets and the Internet.

When used in a LAN networking environment, the computer is connected to the local network through a network interface or adapter. When used in a WAN networking environment, the computer typically includes a modem, or is connected to a communications server on the LAN, or has other means for establishing communications over the WAN, such as the Internet. In a networked environment, program modules depicted relative to the computer, or portions thereof, may be stored in the remote memory storage device. It will be appreciated that network connections described herein are exemplary and other means of establishing a communications link between the computers may be used.

A plurality of existing technologies can be mapped into the system, such as a guilloché, micro-security marks (MSM), and glyphs. In a first example a guilloché font is employed, as described in U.S. Patent Application Serial Nos. 11/756,375 and 11/756,390, for variable data encoding. In contrast to the glyph-like structure, this font would be used as a background creator. In one example, the guilloché character 310 from Figure 3 is used to create the background print of the check 500 shown in Figure 5. In S/N 11/756,390, a guilloché font provided a correct decoding of 117 of 121 characters, without introducing redundancy. Thus, assuming standard redundancy values, approximately 400 bits can be stored in this example.

A second example utilizes MSM technology, wherein a document background is "invisibly" encrypted. The desired bit-density is extremely low, since the main objective is to verify the actual sheet of paper and not any content on the paper. A third example utilizes a glyph-like character set and font that can easily be generated. Figure 6 is an example of a single ASCII character encoded in a glyph-like structure 600 having build in redundancy (e.g., Hamming (8,4)). In this case, the code itself has a certain redundancy implemented to correct single bit and detect double bit errors. The design of character 500 can allow maintenance the detection robustness that is attributed to glyphs as a function of the angular encoding. This font-set can be used as an equivalent to a 2-D barcode.

The claims can encompass embodiments in hardware, software, or a combination thereof.

The word "printer" as used herein encompasses any apparatus, such as a digital copier, bookmaking machine, facsimile machine, multi-function machine, etc. which performs a print outputting function for any purpose.

## Claims

1. A computer implemented method to encode and decode a user-individualized font, comprising:
creating a variable alphabet;
creating a document using this variable alphabet to encode machine readable information
communicating the variable alphabet to a generalized recognition engine via a predefined font mechanism; and
using the alphabet representation to modify the recognition engine, by at least changing one or more template definitions.

2. The method as set forth in claim 1, further including:
wherein the recognition engine is modified by changing the underlying algorithm based on a one or more requirements of a template matcher

3. The method as set forth in claim 1 or claim 2, further including:
wherein the recognition engine is modified by changing at least one of a priority and a confidence weighting of a group of recognizers.

4. A computer implemented method to obtain a customer defined font string, comprising:
creating a font;
creating an input string;
encrypting the input string to create a coded string; and
converting the coded string to a font string based at least in part upon a font definition; and
creating a document using the font string to create machine-readable information.

5. The method as set forth in claim 4, wherein the font definition includes a private key to identify a decoding mechanism.

6. The method as set forth in claim 4 or claim 5, wherein the font definition includes one or more bitmap image definitions.

7. The method as set forth in any of claims 4 to 6, wherein the font is a guilloché pattern that is comprised of variable data differential line patterns.

8. The method as set forth in any of claims 4 to 7, wherein the input string is encrypted utilizing one or more encryption algorithms.

9. The method as set forth in any of claims 4 to 8, wherein the coded string further includes at least one form of redundancy.

10. The method as set forth in any of claims 4 to 9, wherein the input string is translated into a disparate language prior to encryption into the coded string.

11. The method as set forth in any of claims 4 to 10, wherein the decoding mechanism is contained within the font definition.

12. A computer implemented method to decode a character string comprising:
receiving a font definition of a machine readable font;
extracting a font string from a document using said font definition;
recreating a coded string from the font string based at least in part upon a font definition; and
decrypting the coded string to output a user readable character string.

13. The method as set forth in claim 12, wherein the coded string can be recreated via retrieving one or more fonts utilizing template matching wherein processing can occur via a generalized template matcher.

14. The method as set forth in claim 12 or claim 13, wherein the font string extracted is subject to at least one of edge finding and a neural net.

15. The method as set forth in any of claims 12 to 14, wherein the font string is comprised of one or more of a guilloché, a micro security and a glyph mark.
